# EUROPÄISCHE PATENTSCHRIFT

(11) **EP 2 591 583 B1**
(45) Veröffentlichungstag und Bekanntmachung des Hinweises auf die Patenterteilung: **14.06.2017**
(21) Anmeldenummer: 11732371.7
(22) Anmeldetag: 25.06.2011
(51) Int. Cl.: H04L 29/06

(54) **VERFAHREN ZUR SICHEREN DATENÜBERTRAGUNG UND ENTSCHLÜSSELUNG FÜR DIE KOMMUNIKATION VIA INTERNET**
METHOD FOR SECURE COMMUNICATION AND ENCRYPTION FOR INTERNET COMMUNICATION
MÉTHODE DE D'ENCRYPTAGE DE DONNÉES ET DE TRANSMISSION SÉCURISÉE VIA INTERNET

(30) Priorität: 08.07.2010 DE 102010027018
(43) Veröffentlichungstag der Anmeldung: 15.05.2013
(73) Patentinhaber: Bundesdruckerei GmbH, 10969 Berlin (DE)
(72) Erfinder: WEISS, Niklas, 12489 Berlin (DE)
(86) Internationale Anmeldenummer: PCT/EP2011/003142
(87) Internationale Veröffentlichungsnummer: WO 2012/003931

(56) Entgegenhaltungen:
- US-A1- 2004 179 684
- US-A1- 2010 153 237

## Beschreibung

Die Erfindung betrifft ein Verfahren zur Bereitstellung von Daten zwischen einer Datenquelle und einem Anwender, ein Computerprogrammprodukt und ein Computersystem.

Bei vielen Anwendungen, die auf einem Datenaustausch zwischen einem Anwender und einer zentralen Datenquelle beruhen, erfordert die sensible Natur der ausgetauschten Daten besondere Vorkehrungen zu deren Sicherung. Insbesondere muss in vielen Fällen gewährleistet werden, dass die ausgetauschten Daten nur von den beiden Kommunikationspartnern erzeugt und verwertet werden können.

Derzeit gibt es Verfahren, insbesondere Browser Plug-Ins, Applets und eingebettete Programme, die eine sichere Signatur im Browser ermöglichen. Auf diese Weise kann der Anwender überprüfen, ob die angezeigte Webseite tatsächlich die von ihm beabsichtigte Webseite bei dem Kommunikationspartner seines Vertrauens ist.

Bekannt sind ferner Verfahren, bei denen Dokumente für bestimmte Empfänger verschlüsselt werden und diese Dokumente in der Emailanwendung entschlüsselt werden. Ein Beispiel ist der Mail-Standard S/MIME. Ebenso sind Verfahren bekannt, bei denen der Anwender verschlüsselte Daten mittels Anwendungsprogrammen entschlüsseln kann

Des Weiteren bekannt sind Verfahren, den Transportweg von Daten im Internet abzusichern, wobei sich die kommunizierenden Teilnehmer einseitig oder gegenseitig ausweisen (authentisieren). Beispiele dafür sind Server-Side-SSL oder SSL mit Client-Authentication.

Wenn sensible Daten aus einem Server-System (z.B. Webserver) an Internetnutzer übertragen werden, so kann die Übertragungsstrecke durch SSL gegen Ausspähen gesichert werden. Außerdem kann durch Verwendung von Client-Authentication via SSL die Authentizität der Kommunikationsteilnehmer sichergestellt werden. Allerdings versagt diese Technologie bei Verwendung komplexer Infrastrukturen etwa dem Vorschalten einer demilitarisierten Zone (DMZ) vor die geschützten Netzwerke von Unternehmen und Organisationen. Hier wird der SSL-Tunnel und damit die geschützte Übertragung in der DMZ terminiert. Damit kann ein Angreifer beim Eindringen in die DMZ den Datenverkehr mitlesen und gegebenenfalls manipulieren.

Alternativ könnte der Webserver in die interne, sichere Netzwerkzone, beispielsweise ein lokales Bürokommunikationsnetz (BK-Local Area Network oder BK-LAN) verlegt werden, wodurch jedoch die Sicherheitsphilosophie einer DMZ-Infrastruktur unterwandert wird. Sensible Daten, die aus dem internen Netz an den Endnutzer übermittelt werden sollen, liegen damit auf mindestens einem Rechner in der DMZ kurzzeitig im Klartext vor bzw. können von diesem Rechner aus böswillig aus der internen sicheren Netzwerkzone, oder kurz: internen Zone, abgefragt werden.

In der Patentanmeldung US 2010/0153237 A1 sind eine Servervorrichtung und -verfahren für einen persönlichen Content offenbart, die es einem Benutzer, beispielsweise einem Netzteilnehmer, ermöglichen, auf einen Content, beispielsweise ein Videoprogramm, von einem Ort außerhalb des Netzes des Teilnehmers zuzugreifen.

Das Dokument US 2004/0179684 A1 offenbart ein identitätsbasiertes Verschlüsselungs-Nachrichten-System, das eine identitätsbasierte Verschlüsselung zum Unterstützen einer sicheren Kommunikation zwischen Sendern und Empfängern über ein Kommunikationsnetz verwendet.

Der Erfindung liegt demgegenüber die Aufgabe zugrunde, eine durchgehend einheitlich gesicherte Datenübertragung von der Datenquelle bis zum Anwender zu ermöglichen.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben.

Nach Ausführungsformen der Erfindung wird datenquellenseitig ein Verfahren zur Bereitstellung von Daten zwischen einer Datenquelle und einem Anwender geschaffen. Mit "datenquellenseitig" ist hier insbesondere gemeint: Auf Seiten einer Datenquelle arbeitend. Das Verfahren umfasst das Empfangen einer Anfrage und das Feststellen einer Identität des Anwenders. Auf der Grundlage der Identität des Anwenders erfolgt ein Bereitstellen eines Verschlüsselungsdatensatzes. Das Verfahren umfasst weiterhin ein Zusammenstellen der Daten zu einem Übertragungsdatensatz, das Verschlüsseln des Übertragungsdatensatzes und schließlich das Senden des verschlüsselten Datensatzes. Dabei wurde die Anfrage von dem Anwender an die Datenquelle geschickt und die Anfrage betrifft die zu übertragenden Daten. Das Feststellen der Identität des Anwender erfolgt durch die Datenquelle anhand der Anfrage. Das Verschlüsseln des Datensatzes geschieht mittels des Verschlüsselungsdatensatzes, so dass im Regelfall nur der Anwender den verschlüsselten Datensatz wieder entschlüsseln kann. Das schon erwähnte Feststellen der Identität, das Bereitstellen des Verschlüsselungsdatensatzes und das Verschlüsseln des Übertragungsdatensatzes wird zumindest mittelbar durch das Empfangen der Anfrage ausgelöst und automatisch ausgeführt.

Durch diese Maßnahmen wird erreicht, dass die Verschlüsselung nicht mehr (nur) in den Zuständigkeitsbereich der Übertragungsstrecke fällt, sondern von der Datenquelle und dem Anwender übernommen wird. Es kann somit ein Datenaustausch mit automatischer und durchgängiger Verschlüsselung von der Datenquelle bis zum Anwender (von Ende zu Ende) stattfinden. Dabei wird die Verschlüsselung nicht von Netzwerken, Netzwerkgrenzen oder Netzinfrastruktur beeinflusst, die die verschlüsselten Daten auf dem Weg von der Datenquelle zum Anwender passieren. Die Verschlüsselung ist transparent für die zwischen der Datenquelle und dem Anwender liegenden Übertragungsstrecke.

Die Sicherheit eines online erfolgenden Austausches von unter Umständen sensibler Daten wird von der Sicherheit zwischengeschalteter Netzwerk- und Infrastrukturelemente wie De-Militarisierten Zonen (DMZ), Proxyservern usw. entkoppelt. Eine Sicherheitspolicy kann auf einen Ende-zu-Ende-Austausch der Daten abgestimmt werden, wobei den Kommunikationsteilnehmern der Kommunikationspartner zu jedem Zeitpunkt bekannt ist und ein Ausspähen der Daten auf der Übertragungsstrecke (Transportstrecke) ausgeschlossen ist, selbst wenn sicherheitskritische Entitäten auf der Transportstrecke (z.B. Rechner in der DMZ, Routerhardware) angegriffen werden bzw. von Angreifern gebrochen oder infiltriert sind.

Die Erfindung verhindert, dass ein Angreifer beim Eindringen in eine DMZ den Datenverkehr mitlesen und gegebenenfalls manipulieren kann. Die Erfindung verhindert auch, dass möglicherweise sensible Daten, die aus einem internen Netz an den Anwender übermittelt werden, auf einem Rechner in der DMZ kurzzeitig im Klartext vorliegen bzw. von diesem Rechner aus böswillig aus der internen Zone abgefragt werden können.

Das hier beschriebene Verfahren bietet Sicherheit für die Ende-zu-Ende Datenverschlüsselung in komplexen Infrastrukturen unter Nutzung von Internet-Verbindungen. Insbesondere ist das Verfahren resistent gegen Angriffe gegen einzelne Infrastrukturkomponenten wie Netzwerke und DMZ'n.

Nach einer Ausführungsform der Erfindung kann das Verfahren weiterhin ein Extrahieren des Verschlüsselungsdatensatzes aus der Anfrage umfassen. Somit ist der Verschlüsselungsdatensatz auf die Anfrage und folglich auch auf den Anwender abgestimmt. Auf Seiten der Datenquelle muss dann der Verschlüsselungsdatensatz für den Anwender nicht gespeichert sein.

Nach einer Ausführungsform der Erfindung kann das Verschlüsseln mittels eines asymmetrischen Verschlüsselungsverfahren erfolgen. Asymmetrische Verschlüsselungsverfahren können z.B. mit einem Schlüsselpaar arbeiten, welches einen öffentlichen Schlüssel und einen privaten Schlüssel enthält. Der öffentliche Schlüssel dient zum Verschlüsseln von Nachrichten, die für den Inhaber des Schlüsselpaars als Empfänger bestimmt sind. Der Empfänger verwendet nach dem Empfangen einer entsprechend verschlüsselten Nachricht seinen privaten Schlüssel, um die Nachricht zu entschlüsseln. Bei asymmetrischen Verschlüsselungsverfahren kann der öffentliche Schlüssel ohne besondere Sicherheitsvorkehrungen verschickt werden.

Nach einer Ausführungsform der Erfindung kann das Verfahren weiterhin das Extrahieren einer digitalen Signatur des Anwenders aus der Anfrage umfassen. Ferner kann das Verfahren die Verwendung der digitalen Signatur bei der Feststellung der Identität des Anwenders umfassen. Je nach Anwendungsfall kann es notwendig sein, zunächst die Identität des Anwenders zu verifizieren, bevor weitere Aktionen erfolgen. Dies kann zum Beispiel bei Anwendungen auftreten, bei denen in der Datenquelle anwenderspezifische Daten gespeichert sind, wie Kontodaten oder schulische Leistungen. Durch das Prüfen der digitalen Signatur der Anfrage kann ein großer Teil von Betrugsszenarien aufgedeckt werden, bei denen versucht wird, der Datenquelle eine falsche Identität vorzugaukeln, um an vertrauliche Daten des echten Inhabers der vorgegaukelten Identität zu gelangen.

Nach einer Ausführungsform der Erfindung können Identifikationsdaten von vertrauenswürdigen Anwendern bei der Datenquelle hinterlegt sein oder bereitgestellt werden. Die Identifikationsdaten dienen zur Verwendung bei der Feststellung der Identität des Anwenders. Die Datenquelle kann auf diese Weise die Angaben des Anwenders, die dieser im Rahmen der Anfrage macht, mit vorab gespeicherten Daten abgleichen, die zum Beispiel während eines Registrierungsvorgangs des Anwenders bei der Datenquelle erzeugt wurden. Zumindest zum Teil könnte der Registrierungsvorgang unter Umständen auch auf andere Transportwege als eine Computernetzwerkverbindung zurückgreifen, wie beispielsweise eine postalische Zustellung oder eine Verbindung über ein (Mobil-)telefonnetz. Bei geeigneter Wahl der Identifikationsdaten können diese das Risiko mindern, dass ein unbefugter Dritter eine Anfrage im Namen eines Anwenders an die Datenquelle schickt und von der Datenquelle eine entsprechende Antwort erhält. Zwar bietet die Verschlüsselung des Übertragungsdatensatzes im Normalfall einen Schutz gegen das Lesen des Übertragungsdatensatzes durch den unbefugten Dritten . Jedoch kann der unbefugte Dritte unter Umständen bereits aus der Tatsache, dass die Datenquelle auf eine Anfrage des Anwenders antwortet, Rückschlüsse ziehen und diese Wissen für seine Zwecke ausnutzen.

Nach einer Ausführungsform der Erfindung kann das Feststellen der Identität des Anwenders unter Einbeziehung vertrauenwürdiger dritter Stellen erfolgen. Derartige vertrauenswürdige dritte Stellen können Trustcenter, eID-Provider, Clearingstellen oder ähnliche Einrichtungen sein. Wenn eine derartige vertrauenswürdige dritte Stelle in dem vorgestellten Verfahren verwendet wird, können der Anwender und die Datenquelle auf die dort hinterlegten Daten zurückgreifen und somit den Aufwand für eine zweiseitige Registrierung (zwischen Anwender und Datenquelle) reduzieren. Die bei der/den vertrauenswürdigen dritten Stelle(n) hinterlegten Daten können für eine Vielzahl von Anwendungen und Dienste verwendet werden. Diese vielfältige Verwendbarkeit rechtfertigen in der Regel auch einen erhöhten Aufwand bei der Nachprüfung der Richtigkeit der Angaben, die der Anwender während eines Registrierungsvorgangs bei der vertrauenswürdigen dritten Stelle gemacht hat.

Nach einer Ausführungsform der Erfindung kann das Senden des verschlüsselten Übertragungsdatensatzes über eine gesicherte Übertragungsstrecke erfolgen. Diese Maßnahme bietet einen weiteren Schutz gegen ein Ausspähen der Daten. Die gesicherte Übertragungsstrecke kann beispielsweise mit Hilfe von SSL (Secure Socket Layer) implementiert sein.

Nach einer Ausführungsform der Erfindung kann das Verfahren weiterhin ein Prüfen der Struktur der Anfrage oder des verschlüsselten Übertragungsdatensatzes auf einem Transportweg zwischen dem Anwender und der Datenquelle umfassen. Eine derartige Strukturprüfung kann beispielsweise verwendet werden, um Angriffe auf eine Backend-Infrastruktur eines Unternehmens, einer Behörde oder einer sonstigen Einrichtung zu erkennen und frühzeitig abzufangen, d.h. bevor die Angriffe die Backend-Infrastruktur erreichen. Ein Beispiel für derartige Angriffe sind sogenannte Denial-of-Service-Angriffe.

In einem weiteren Aspekt betrifft die Erfindung ein anwender-seitiges Verfahren zum Anfordern und Empfangen von verschlüsselten Daten. Das Verfahren umfasst das Erstellen einer Anfrage für eine Datenquelle; das Einfügen von Identitätsdaten des Anwenders in die Anfrage; das Senden der Anfrage an die Datenquelle; und das Entschlüsseln eines verschlüsselten Datensatzes innerhalb der Antwort mittels eines Entschlüsselungsdatensatzes, der mit den Identitätsdaten logisch verknüpft ist. Die Antwort kann aufgrund der Verschlüsselung und der Verknüpfung mit den Identitätsdaten in der Regel nur von dem Anwender gelesen werden, für den sie bestimmt ist. Das Verfahren läuft für den Anwender transparent ab, d.h. der Anwender muss sich nicht um die einzelnen Aktionen kümmern, sondern lediglich den Befehl zum Senden der Anfrage geben. Beispielsweise kann ein Computersystem des Anwenders diesen Befehl zum Sender der Anfrage interpretieren und die erwähnten Aktionen automatisch ausführen. Die Interaktivität des Anwenders mit der Datenquelle steigt bei gleichzeitigem Beibehalten eines hohen Sicherheitsstandards.

Nach einer Ausführungsform der Erfindung kann der Entschlüsselungsdatensatz auf einem gesicherten Trägermedium gespeichert sein. Beispiele für das gesicherte Trägermedium können Smartcards, SIM-Karten (Subscriber Identity Module), HSMs (Hardware Security Modules) oder ähnliche Vorrichtungen sein.

Nach einer Ausführungsform der Erfindung kann das Verfahren weiterhin ein Empfangen von Authentisierungsdaten von dem Anwender und ein Prüfen der Authentisierungsdaten umfassen. In Erwiderung auf eine positive Antwort auf das Prüfen der Authentisierungsdaten kann zumindest eine der folgenden Aktionen freigegeben werden:
Erstellen der Anfrage, Einfügen der Identitätsdaten und/oder Senden der Anfrage.

Nach einer Ausführungsform der Erfindung kann das Verfahren weiterhin ein Signieren der Anfrage mittels einer digitalen Signatur vor dem Senden der Anfrage umfassen. Insbesondere ist somit eine Authentisierung des Anwenders gegenüber der Datenquelle bereitgestellt. Durch die digitale Signatur der Anfrage wird mit hoher Sicherheit gewährleistet, dass der angebliche Anwender authentisch ist. Vorzugsweise ist die digitale Signatur keine konstante, unveränderliche Information, sondern sie errechnet sich aus dem Inhalt der zu signierenden Nachricht, wofür in der Regel ein Schlüssel benötigt wird, der nur dem Unterzeichner bekannt ist.

In einem weiteren Aspekt betrifft die Erfindung ein Computerprogrammprodukt, insbesondere ein digitales Speichermedium, mit von einem Computersystem ausführbaren Instruktionen zur Durchführung eines (datenquellenseitigen und/oder anwenderseitigen) Verfahrens wie zuvor beschrieben.

Nach einer Ausführungsform der Erfindung kann das Computerprogrammprodukt eines von einer Stand-alone Anwendung, einem Applet, einem Browser-Plug-In oder einer Anwendung auf Drittkomponenten sein. Ein Beispiel für eine Drittkomponente kann ein Kartenleser oder eine Smartcard sein. Es kann auch sein, dass einige Aktionen auf einem Computersystem ausgeführt und andere Aktionen auf einer solchen Drittkomponente. Beispielsweise könnten Ver- und Entschlüsselungsvorgänge auf einer besonders gesicherten Drittkomponente wie einer Smartcard ausgeführt werden, um zu verhindern, dass die Ver- und Entschlüsselungsdatensätze durch Schadprogramme ausgelesen werden können.

In einem weiteren Aspekt betrifft die Erfindung ein Computersystem umfassend eine Netzwerkschnittstelle, eine Datenquelle, eine Verschlüsselungseinheit; und eine Identitätsfeststellungseinheit. Die Netzwerkschnittstelle ist ausgelegt und konfiguriert, das Eintreffen einer Anfrage bezüglich bereitzustellender Daten zu detektieren und zumindest an die Identitätsfeststellungseinheit eine Signalisierung zu schicken. Die Identitätsfeststellungseinheit ist ausgelegt und konfiguriert, als Reaktion auf die Signalisierung die Anfrage hinsichtlich einer Identität des Anwenders auszuwerten und auf der Grundlage der Identität einen Verschlüsselungsdatensatz bereitzustellen. Die Verschlüsselungseinheit ist ausgelegt und konfiguriert, die von der Datenquelle bereitgestellten und zu einem Datensatz zusammengestellten Daten mittels des Verschlüsselungsdatensatzes zu verschlüsseln, so dass im Regelfall nur der Anwender den verschlüsselten Datensatz wieder entschlüsseln kann.

Das Computersystem übernimmt die Verarbeitung der Anfrage einschließlich der Verschlüsselung mit dem passenden Schlüssel selbständig. Auf Seiten der Datenquelle ist ein Eingreifen durch einen Benutzer nicht notwendig. Für den Anwender ergibt sich dadurch eine unmittelbare und gleichzeitig gesicherte Beantwortung seiner Anfrage. Das Computersystem kann insbesondere Anfragen verarbeiten, die über ein Web-Browser-Programm an einen Websserver geschickt wurden. Durch das vorgeschlagene Computersystem kann die Kommunikation zwischen Anwender und Datenquelle sicher gegen Ausspähen gemacht werden, wobei eine echte Ende-zu-Ende Verschlüsselung erfolgt. Dies steht im Gegensatz zu bekannten Transportwegverschlüsselungen, welche unter Umständen an bestimmten Punkten im Netz beendet werden, z.B. beim Übergang von einem öffentlichen Netz zu einem unternehmens-internen Netz.

Das Computersystem kann weiterhin dieselben oder ähnlichen optionalen Merkmale aufweisen, wie das bereits beschriebene Verfahren.

Insbesondere für Mitarbeiter eines Unternehmens, die häufig außer Haus tätig sind, insbesondere Außendienstmitarbeiter oder Supportmitarbeiter, stellt die Erfindung eine große Erleichterung bereit, weil Zugriffe auf Daten der internen, sicheren Netzwerkzone, beispielsweise sichere BK-LAN-Daten, ermöglicht sind, ohne dass ein Unbefugter - auch nicht über Zugriff auf beispielsweise eine DMZ - die Daten lesen oder gar manipulieren könnte. In einem Beispielsszenario befindet sich ein Mitarbeiter eines Unternehmens vor Ort bei einem Kunden oder Auftraggeber und möchte beispielsweise einen Zustand eines Antrags oder eines Auftrags des Kunden oder Auftraggebers über eine Internetverbindung ermitteln. Üblicherweise wäre eine derartige Abfrage über das Internet problematisch, weil eine herkömmliche gesicherte Strecke beispielsweise in einer DMZ des Unternehmens endet, und somit einem potentiellen Angreifer ein Zugriff auf die unverschlüsselte Anfrage sowie den unverschlüsselten Antrags- bzw. Auftragsdatensatz ermöglicht wäre. Die Erfindung schafft diesbezüglich Abhilfe, indem die Verbindung in verschlüsselter Form vorzugsweise erst im BK-LAN endet. Und nicht, wie es beispielsweise bei einer SSL-Verschlüsselung oder einem VPN-Tunnel der Fall wäre, in der DMZ. Somit sind die zu schützenden Antrags- bzw. Auftragsdaten, wenn sie in der DMZ vorliegen, immer noch in einem verschlüsselten Zustand. Erreicht wird die erfindungsgemäße Wirkung vorzugsweise durch ein entsprechend konfiguriertes Plugin im Browser des Außendienstmitarbeiters, das derart ausgebildet ist, dass es eine Ende-zu-Ende-Verschlüsselung zwischen dem Browserfenster und der Anwendung bzw. den Daten in der internen, sicheren Netzwerkzone bereitstellt. Mit anderen Worten schafft die Erfindung eine sichere Ende-zu-Ende-Verbindung über das Internet trotz Zwischenschaltung einer Netzwerkinstanz wie beispielsweise einen Proxy oder eine DMZ. Nichtsdestotrotz ist die interne, sichere Netzwerkzone dennoch vollständig vom Internet, insbesondere logisch, abgekoppelt.

Im Weiteren werden Ausführungsformen der Erfindung mit Bezug auf die Zeichnungen näher erläutert. Es zeigen:
Fig. 1 ein schematisches Flussdiagramm einer Ausführungsform eines erfindungsgemäßen datenquellenseitigen Verfahrens,
Fig. 2 ein schematisches Flussdiagramm einer Ausführungsform eines erfindungsgemäßen anwenderseitigen Verfahrens,
Fig. 3 ein schematisches Kommunikationsdiagramm einer Anfrage und einer zugehörigen Antwort zwischen einem Anwender und einer Datenquelle,
Fig. 4. ein schematisches Blockdiagramm einer Ausführungsform eines erfindungsgemäßen Computersystems, sowie dessen Einbindung in eine Netzwerkarchitektur.

Elemente der nachfolgenden Ausführungsformen, die einander entsprechen, werden mit denselben Bezugszeichen gekennzeichnet.

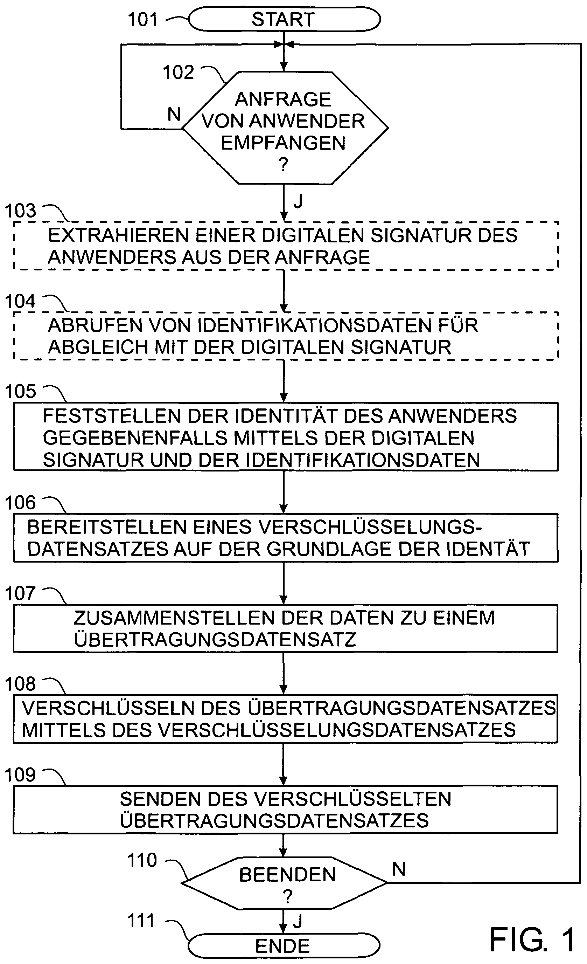

Die Fig. 1 zeigt eine Ausführungsform des erfindungsgemäßen Verfahrens für die Datenquellenseite. Das Verfahren beginnt bei Schritt 101. An einem Verzweigungspunkt 102 wird geprüft, ob eine Anfrage von einem Anwender empfangen wurde. Falls nicht, springt das Verfahren zurück, so dass der Verzweigungspunkt 102 erneut ausgeführt wird. Diese Darstellung der fortwährenden Abfrage (Polling) wurde aus Gründen der Anschaulichkeit gewählt. Selbstverständlich kann auch ein Interrupt-orientiertes Verfahren, ein Callback-Verfahren, ein allgemein Event-orientiertes Verfahren oder eine Programmstruktur nach einem Observer-Pattern vorgesehen sein. Die hier vorgestellten Alternativen können selbstverständlich auch bei den nachfolgenden Darstellungen eines Polling vorgesehen sein. Falls eine Anfrage empfangen wurde, kann das Verfahren in einem optionalen Schritt 103 eine digitale Signatur des Anwenders aus der Anfrage extrahieren. Optionale Schritte und Elemente sind in den Figuren in gestrichelter Linie ausgeführt. In einem weiteren optionalen Schritt 104 können dann Identifikationsdaten des Anwenders abgerufen werden, um diese mit der digitalen Signatur abzugleichen. In einem Schritt 105 führt das Verfahren eine Feststellung der Identität des Anwenders aus, gegebenenfalls mittels der digitalen Signatur und der Identifikationsdaten. Es wäre aber auch möglich, dass die Feststellung der Identität ohne eine digitale Signatur und/oder ohne Identifikationsdaten arbeitet, beispielsweise durch eine innerhalb der Anfrage mit übermittelte Anwenderidentifikation.

Gemäß dem datenquellenseitigen Verfahren wird sodann bei Schritt 106 ein Verschlüsselungsdatensatz auf der Grundlage der festgestellten Identität bereitgestellt. Der Verschlüsselungsdatensatz kann beispielsweise ein öffentlicher Schlüssel des Anwenders sein, der bei der Datenquelle oder in deren Nähe zur Verwendung durch die Datenquelle gespeichert wird. Dementsprechend kann der Verschlüsselungsdatensatz durch eine Datenbankabfrage, in welche die Identität des Anwenders als Abfragekriterium eingeht, bereitgestellt werden.

Die Anfrage des Anwenders zielt häufig darauf ab, bestimmte Daten von der Datenquelle zu erhalten. Diese Daten werden in der Folge als Nutzdaten bezeichnet und können zum Beispiel Kontodaten, Gesundheitsdaten oder unternehmensspezifische Daten wie Verkaufszahlen, Preise, Lagerbestände etc. sein. Sobald die Identität des Anwenders feststeht, gegebenenfalls dessen Berechtigung verifiziert wurde und weiterhin gegebenenfalls die Art und Suchkriterien der zu übermittelnden Daten ermittelt wurde, werden die Nutzdaten gemäß dieser Vorgaben zu einem Datensatz zusammengestellt (Schritt 107). Der mittlerweile vorliegende anwender-spezifische Verschlüsselungsdatensatz dient dazu, den Datensatz zu verschlüsseln, wie in Schritt 108 aufgeführt. Schließlich wird bei Schritt 109 der nunmehr verschlüsselte Datensatz an den Anwender gesendet.

An einem Verzweigungspunkt 110 wird festgestellt, ob das Verfahren beendet werden soll. Falls das Verfahren nicht beendet werden soll, dann springt es zurück zur Instruktion 102. Im gegenteiligen Fall wird das Verfahren bei der Instruktion 111 beendet.

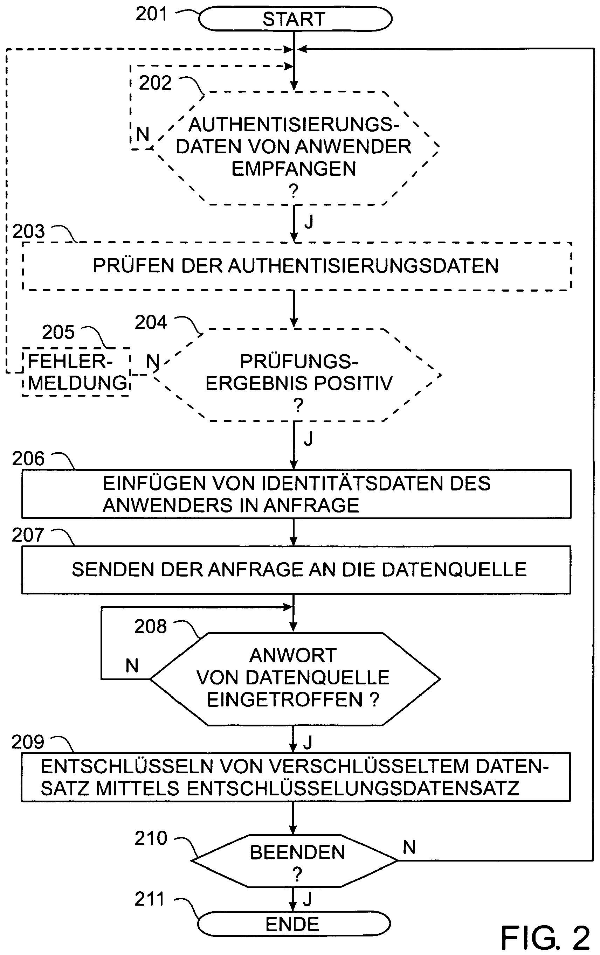

Die Fig. 2 zeigt eine Ausführungsform des erfindungsgemäßen Verfahrens für die Anwenderseite. Das Verfahren beginnt bei Schritt 201 wenn der Anwender den Befehl gibt, eine Anfrage an die Datenquelle zu senden. Optional wird beim Verzweigungspunkt 202 zunächst geprüft, ob Authentisierungsdaten vom Anwender empfangen wurden. Falls nicht, springt das Verfahren zurück für ein erneutes Durchlaufen von Verzweigungspunkt 202. Eventuell kann das Verfahren den Anwender auffordern, die Authentisierungsdaten bereitzustellen. In einem weiteren optionalen Schritt 203 werden die Authentisierungsdaten geprüft. Die Authentisierungsdaten können ein Passwort, eine PIN (Personal Identification Number), eine TAN (Transaction Authentication Number), ein physikalischer oder ein digitaler Schlüssel oder dergleichen sein.

Sofern Authentisierungsdaten vorliegen, können diese bei Schritt 204 geprüft werden. Bei negativem Prüfungsergebnis kann eine Fehlermeldung durch das Verfahren herausgegeben werden (Schritt 205), woraufhin das Verfahren zurück an den Start des Verfahrens bei Schritt 201 springt. Ein negatives Ergebnis bedeutet, dass die Authentisierungsdaten darauf hinweisen, dass der vorgebliche Anwender nicht der echte Anwender ist.

Im Falle eines positiven Ergebnisses der Authentisierungsprüfung werden bei Schritt 206 die Identitätsdaten des Anwenders in die Anfrage eingefügt. Dann wird bei 207 die Anfrage an die Datenquelle gesendet. Während die Anfrage zur Datenquelle reist und von der Datenquelle verarbeitet wird, geht das anwenderseitige Verfahren in eine Warteschleife. Anstelle einer Warteschleife können auch andere Mechanismen zum Warten auf ein bestimmtes Ereignis verwendet werden. Die Warteschleife umfasst einen Verzweigungspunkt 208 innerhalb welchem geprüft wird, ob eine Antwort von der Datenquelle bereits eingetroffen ist. Wenn nicht, wird der Verzweigungspunkt 208 erneut ausgeführt. Wenn die Antwort vorliegt, dann fährt das Verfahren bei Schritt 209 fort, indem es den in der Antwort enthaltenen verschlüsselten Datensatz mit Hilfe des Entschlüsselungsdatensatzes entschlüsselt. Der weiter oben erwähnte Verschlüsselungsdatensatz und der Entschlüsselungsdatensatz können insbesondere ein komplementäres Schlüsselpaar bilden, das einen öffentlichen Schlüssel (Verschlüsselungsdatensatz) und einen geheimen Schlüssel (Entschlüsselungsdatensatz) enthält.

An einem Verzweigungspunkt 210 wird festgestellt, ob das Verfahren beendet werden soll. Falls das Verfahren nicht beendet werden soll, dann springt es zurück zur Instruktion 202. Im gegenteiligen Fall wird das Verfahren bei der Instruktion 211 beendet.

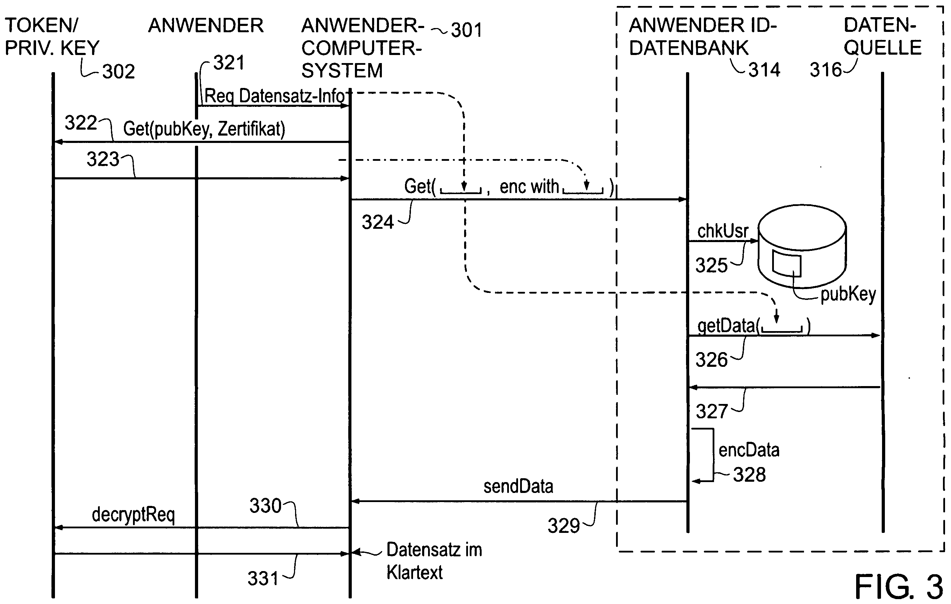

Die Fig. 3 zeigt ein Kommunikationsdiagramm zwischen dem Anwender und der Datenquelle. Die Kommunikation zwischen dem Anwender und der Datenquelle schließt auch ein Anwender-Computersystem und auf der Seite der Datenquelle eine Anwenderidentitätsdatenbank ein.

Während einer Nutzungsphase schickt der Anwender zunächst eine Anfrage 321 ("Req Datensatz-Info") an das Anwender-Computersystem 301. Das Anwender-Computersystem 301 fragt mittels einer Anweisung/Nachricht "Get(pubKey, Zertifikat)" 322 bei einem Token bzw. einem privaten Schlüssel 302 nach einem öffentlichen Schlüssel, der für das Verschlüsseln der Antwort verwendet werden soll. Gegebenenfalls wird im Rahmen der Anweisung/Nachricht 322 auch ein Zertifikat zur Authentifizierung des Anwenders durch die Datenquelle angefordert. Das Token 302 sendet eine Nachricht 323 mit dem öffentlichen Schlüssel und gegebenenfalls dem Zertifikat.

Das Anwender-Computersystem 301 erstellt aus den vom Anwender und vom Token 302 gelieferten Informationen eine Anfrage 324 ("Get(__, enc with __)"). Die Anfrage 324 enthält die eigentliche Anfrage des Anwenders, sowie eine Angabe darüber, wie und/oder womit die Datenquelle 316 die Antwort verschlüsseln soll. Die Anfrage 324 wird nun an die Datenquelle 316 geschickt. Man beachte, dass die Datenquelle 316 und die Anwenderidentitätsdatenbank 314 in der Regel eine Einheit bilden oder benachbart zueinander angeordnet sind (benachbart im Sinne der Nähe innerhalb eines Computernetzwerks, nicht unbedingt physikalisch benachbart). Gegebenenfalls wertet die Anwender-ID-Datenbank 314 Identifizierungsdaten aus, um einen passenden Verschlüsselungsdatensatz bereitzustellen (Anfrage "chkUsr" 325). Die Identifzierungsdaten und der entsprechende Verschlüsselungsdatensatz können beispielsweise bei einer erstmaligen Anmeldung des Anwenders bei der Datenquelle erzeugt und gemeinsam abgespeichert werden.

Die Hauptanfrage 326 ("getData(__) wird durch die eigentliche Datenquelle 316 beantwortet, d.h. die Datenquelle 316 erzeugt eine passende Antwort 327. Die Antwort 327 wird mittels des Verschlüsselungsdatensatzes ("pubKey") im Rahmen einer mit "encData" bezeichneten Aktion 328 verschlüsselt und in dieser verschlüsselten Form an das Anwender-Computersystem zurückgeschickt ("sendData", 329). Das Anwender-Computersystem leitet die Antwort an das Token/den privaten Schlüssel 302 weiter mittels einer Anweisung 330 ("decryptReq"), die empfangene Antwort zu entschlüsseln. Das Token/der private Schlüssel 302 stellt nach erfolgreicher Entschlüsselung den Datensatz im Klartext mittels einer Nachricht 331 bereit. Der Anwender kann daraufhin die Antwort lesen und auswerten.

Auf dem gesamten Transportweg zwischen der Datenquelle und dem Anwender-Computersystem ist die Antwort verschlüsselt.

Bei einer möglichen Ausführungsform der Erfindung wird der Verschlüsselungsdatensatz stets im Rahmen der Anfrage 324 mitgeschickt, so dass auf ein Speichern des Verschlüsselungsdatensatzes verzichtet werden kann. Nachdem die Datenquelle die Antwort verschlüsselt hat, kann sie den Verschlüsselungsdatensatz entsorgen, also löschen.

Wie bereits kurz erwähnt kann die Kommunikation zwischen dem Anwender und der Datenquelle in einer alternativen Ausführungsform der Erfindung neben der Nutzungsphase auch eine vorgeschaltete Registrierungsphase umfassen. In der Registrierungsphase geht es unter anderem darum, die Voraussetzungen zu schaffen, dass die Identität des Anwenders während der Nutzungsphase bei der Datenquelle bekannt ist und von dieser geprüft werden kann, sofern dies gewünscht wird oder für die Art der Anwendung erforderlich ist. Auch kann während der Registrierungsphase dafür gesorgt werden, dass die Datenquelle die angeforderten Daten exklusiv für den Anwender verschlüsseln kann.

Die (optionale) Registrierungsphase beginnt üblicherweise damit, dass der Anmelder sich bei der Datenquelle anmeldet. Das Computersystem 301 des Anwenders fügt der Anmeldung den Verschlüsselungsdatensatz hinzu, den die Datenquelle benötigt, um die spätere Verschlüsselung der Antworten für den Anwender zu gewährleisten. Zusätzlich können der Anmeldung auch Identifizierungsdaten des Anwenders beigefügt werden. Unter Umständen übernimmt der Verschlüsselungsdatensatz auch die Rolle der Identitätsdaten, zum Beispiel im Falle eines asymmetrischen Verschlüsselungsverfahrens, bei dem der öffentliche Schlüssel auch zur Überprüfung der digitalen Signatur des Absenders verwendet werden kann.

Die Registrierungsphase kann auch das Herunterladen von spezieller Software beinhalten, die auf dem Anwender-Computersystem zu installieren ist.

Der Verschlüsselungsdatensatz wird in der Anwenderidentitätsdatenbank 314 der Datenquelle gespeichert. Damit ist die Registrierungsphase abgeschlossen. Man beachte, dass der Austausch des Verschlüsselungsdatensatzes während der Registrierungsphase nicht unbedingt über ein Computernetzwerk erfolgen muss, sondern auch andere Informationsübertragungsmedien nutzen kann, einschließlich des Versenden von physikalischen Datenträgern über den Postweg.

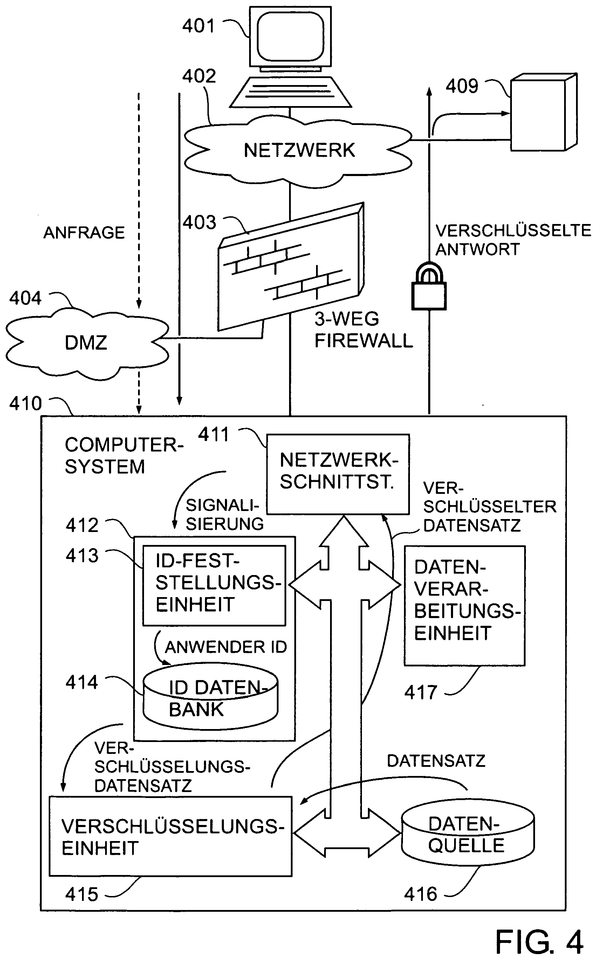

In Fig. 4 ist eine schematisches Blockschaltbild eines Computernetzwerk gezeigt mit einem Anwender-Computersystem 401 und einem datenquellenseitigen Computersystem 410. Das Anwender-Computersystem 401 und das datenquellenseitige Computersystem 410 sind über ein Netzwerk 402 verbunden. Um das Computersystem 410 vor Angriffen aus dem Netz zu schützen ist eine Firewall 403 zwischen das Netzwerk 402 und das Computersystem 410 geschaltet. In dem dargestellten Fall ist die Firewall als eine 3-Weg-Firewall ausgebildet, die den Anschluss einer demilitarisierten Zone (DMZ) 404 ermöglicht. Anstelle einer 3-Weg-Firewall kann auch eine Lösung mit zwei Firewalls verwendet werden, wobei sich der Anschluss für die demilitarisierte Zone im Normalfall zwischen den zwei Firewalls befinden würde.

Das Computersystem 410 umfasst eine Netzwerkschnittstelle 411, die mit der 3-Weg-Firewall 403 verbunden ist. Eine Untereinheit 412 des Computersystems 410 enthält eine Identitätsfeststellungseinheit (ID-Feststellungseinheit) 413. Vorzugsweise ist auch eine Identitätsdatenbank (ID-Datenbank) 414 enthalten.

Das Computersystem 410 umfasst weiterhin eine Verschlüsselungseinheit 415 und eine Datenquelle 416, die die Nutzdaten enthält, welche von dem Anwender abgefragt werden. Im Normalfall umfasst das Computersystem 410 auch eine Datenverarbeitungseinheit 417.

Eine Anfrage von dem Anwender-Computersystem 401 wird über das Netzwerk 402 und die 3-Weg-Firewall 403 an das Computersystem 410 geleitet. Alternativ kann die Anfrage von der 3-Weg-Firewall auch an die demilitarisierte Zone 404 geleitet werden, von wo aus die Anfrage weitergeleitet wird oder eine zweite Anfrage an das Computersystem 410 gesendet wird.

Bei Eintreffen der Anfrage an der Netzwerkschnittstelle 411 erzeugt diese eine Signalisierung, die beispielsweise an die ID-Feststellungseinheit 413 geschickt wird. Die Anwenderfeststellungseinheit 413 versucht die Identität des Anwenders und eine entsprechende Anwender-ID zu ermitteln. Diese wird an die Anwender-ID-Datenbank 414 übermittelt, um den passenden Verschlüsselungsdatensatz herauszufinden.

Sobald die Identität des Anwenders geklärt und gegebenenfalls verifiziert ist, fängt die Datenquelle 416 an, die von dem Anwender angeforderten Daten zu einem Datensatz zusammenzustellen. Sowohl der Verschlüsselungsdatensatz als auch der Datensatz gehen der Verschlüsselungseinheit 415 zu. Die Verschlüsselungseinheit 415 erzeugt einen verschlüsselten Datensatz und sendet diesen an die Netzwerkschnittstelle 411.

Die verschlüsselte Antwort wird dann über das Netzwerk 402, die 3-Weg-Firewall 403 und eventuell die demilitarisierte Zone 404 an das Anwender-Computersystem 401 geschickt. Das Anwender-Computersystem entschlüsselt die Antwort selbständig und macht die Daten so für den Anwender nutzbar.

Auf dem Weg von dem Computersystem 410 zum Anwender-Computersystem 401 kann die verschlüsselte Antwort hinsichtlich ihrer Struktur von einer Netzwerkkomponente 409 überprüft werden. Jedoch kann die Netzwerkkomponente 409 die verschlüsselte Antwort normalerweise nicht im Klartext analysieren.

### Bezugszeichenliste

- 101: Programminstruktionen ("Start")
- 102: Programminstruktionen (Verzweigungspunkt)
- 103: Programminstruktionen
- 104: Programminstruktionen
- 105: Programminstruktionen
- 106: Programminstruktionen
- 107: Programminstruktionen
- 108: Programminstruktionen
- 109: Programminstruktionen
- 110: Programminstruktionen (Verzweigungspunkt)
- 111: Programminstruktionen ("Ende")
- 201: Programminstruktionen ("Start")
- 202: Programminstruktionen (Verzweigungspunkt)
- 203: Programminstruktionen
- 204: Programminstruktionen (Verzweigungspunkt)
- 205: Programminstruktionen (Fehlermeldung)
- 206: Programminstruktionen
- 207: Programminstruktionen
- 208: Programminstruktionen (Verzweigungspunkt)
- 209: Programminstruktionen
- 210: Programminstruktionen (Verzweigungspunkt)
- 211: Programminstruktionen ("Ende")
- 301: Anwender-Computersystem
- 302: Token/privater Schlüssel
- 314: Anwender-ID-Datenbank
- 316: Datenquelle
- 321: Anfrage "Req Datensatz Info"
- 322: Anfrage "Get(pubKey, Zertifikat)"
- 323: Nachricht mit öffentlichem Schlüssel (pubKey) und/oder Zertifikat
- 324: Anfrage von Anwender-Computersystem an Datenbank einschließlich Information zur Verschlüsselung
- 325: Anfrage zur Überprüfung der Identität des Anwenders
- 326: Hauptanfrage innerhalb der Datenquelle ("getData()")
- 327: Bereitstellung der Nutzdaten durch die Datenquelle
- 328: Verschlüsselung des Übertragungsdatensatzes ("encData")
- 329: Senden des verschlüsselten Übertragungsdatensatzes über das Netz ("send-Data")
- 330: Anfrage an Token/privaten Schlüssel zum Entschlüsseln ("decryptReq")
- 331: Bereitstellung des Datensatzes im Klartext
- 401: Anwender-Computersystem
- 402: Computer-Netwerk
- 403: 3-Weg-Firewall
- 404: Demilitarisierte Zone (DMZ)
- 409: Netzwerkkomponente zur Strukturprüfung der verschlüsselten Antwort
- 410: (datenquellenseitiges) Computersystem
- 411: Netzwerkschnittstelle
- 412: Untereinheit zur Anwenderidentitätsfeststellung
- 413: Identitätsfeststellungseinheit
- 414: Anwender-ID-Datenbank
- 415: Verschlüsselungseinheit
- 416: Datenquelle
- 417: Datenverarbeitungseinheit

## Patentansprüche

1. Verfahren zur Bereitstellung von Daten zwischen einer Datenquelle und einem Anwender, umfassend:
Empfangen einer Anfrage (102), welche die zu übertragenden Daten betrifft, wobei die Anfrage von dem Anwender an die Datenquelle verschickt wurde;
Feststellen einer Identität des Anwenders durch die Datenquelle anhand der Anfrage (105);
Bereitstellen eines Verschlüsselungsdatensatzes auf der Grundlage der Identität des Anwenders (106);
Zusammenstellen der Daten zu einem Übertragungsdatensatz (107);
Verschlüsseln des Übertragungsdatensatzes mittels des Verschlüsselungsdatensatzes (108);
Senden des verschlüsselten Übertragungsdatensatzes an den Anwender (109); wobei das Feststellen der Identität, das Bereitstellen des Verschlüsselungsdatensatzes und das Verschlüsseln des Übertragungsdatensatzes zumindest mittelbar durch das Empfangen der Anfrage ausgelöst und automatisch ausgeführt wird, weiterhin umfassend:
Extrahieren des Verschlüsselungsdatensatz aus der Anfrage.

2. Verfahren gemäß Anspruch 1, wobei das Verschlüsseln mittels eines asymmetrischen Verschlüsselungsverfahren erfolgt.

3. Verfahren gemäß einem der Ansprüche 1 bis 2, weiterhin umfassend:
Extrahieren einer digitalen Signatur des Anwenders aus der Anfrage und Verwenden der digitalen Signatur bei der Feststellung der Identität des Anwenders.

4. Verfahren gemäß einem der Ansprüche 1 bis 3, wobei Identifikationsdaten von vertrauenswürdigen Anwendern bei der Datenquelle hinterlegt sind oder bereitgestellt werden, zur Verwendung beim Feststellen der Identität des Anwenders.

5. Verfahren gemäß einem der Ansprüche 1 bis 4, wobei das Festellen der Identität des Anwenders unter Einbeziehung vertrauenwürdiger dritter Stellen wie einem Trustcenter, einem eID-Provider oder Clearingstellen erfolgt.

6. Verfahren gemäß einem der Ansprüche 1 bis 5, wobei das Senden des verschlüsselten Übertragungsdatensatzes über eine gesicherte Übertragungsstrecke erfolgt.

7. Verfahren gemäß einem der Ansprüche 1 bis 6, weiterhin umfassend ein Prüfen der Struktur der Anfrage oder des verschlüsselten Übertragungsdatensatzes auf einem Transportweg zwischen dem Anwender und der Datenquelle.

8. Verfahren zum Anfordern und Empfangen von verschlüsselten Daten, umfassend:
Erstellen einer Anfrage für eine Datenquelle;
Einfügen von Identitätsdaten des Anwenders in die Anfrage;
Senden der Anfrage an die Datenquelle;
Empfangen einer Antwort von der Datenquelle;
Entschlüsseln eines verschlüsselten Datensatzes innerhalb der Antwort mittels eines Entschlüsselungsdatensatzes, der mit den Identitätsdaten logisch verknüpft ist.

9. Verfahren gemäß Anspruch 8, wobei der Entschlüsselungsdatensatz auf einem gesicherten Trägermedium gespeichert ist.

10. Verfahren gemäß Anspruch 8 oder 9, weiterhin umfassend:
Empfangen von Authentisierungsdaten von dem Anwender;
Prüfen der Authentisierungsdaten; und
in Erwiderung auf eine positive Antwort auf das Prüfen der Authentisierungsdaten: Freigeben von zumindest einer der Aktionen
Erstellen der Anfrage,
Einfügen der Identitätsdaten und
Senden der Anfrage.

11. Verfahren gemäß einem der Ansprüche 8 bis 10, weiterhin umfassend:
Signieren der Anfrage mittels einer digitalen Signatur vor dem Senden der Anfrage an die Datenquelle.

12. Computerprogrammprodukt mit von einem Computersystem ausführbaren Instruktionen zur Durchführung eines Verfahrens nach einem der vorhergehenden Ansprüche.

13. Computerprogrammprodukt gemäß Anspruch 12, wobei das Computerprogrammprodukt eines von einer Stand-alone-Anwendung, einem Applet, einem Browser-Plug-In oder einer Anwendung auf Drittkomponenten ist.

14. Computersystem (410) umfassend:
eine Netzwerkschnittstelle (411);
eine Datenquelle (416);
eine Verschlüsselungseinheit (415);
eine Identitätsfeststellungseinheit (413);
wobei die Netzwerkschnittstelle ausgelegt und konfiguriert ist, das Eintreffen einer Anfrage bezüglich bereitzustellender Daten zu detektieren und zumindest an die Identitätsfeststellungseinheit eine Signalisierung zu schicken;
wobei die Identitätsfeststellungseinheit ausgelegt und konfiguriert ist, als Reaktion auf die die Signalisierung die Anfrage hinsichtlich einer Identität des Anwenders auszuwerten und auf der Grundlage der Identität einen Verschlüsselungsdatensatz bereitzustellen; und
wobei die Verschlüsselungseinheit ausgelegt und konfiguriert ist, die von der Datenquelle bereitgestellten und zu einem Datensatz zusammengestellten Daten mittels des Verschlüsselungsdatensatzes zu verschlüsseln, wobei der Verschlüsselungsdatensatz aus der Anfrage extrahiert wird.

## Claims

1. Method for providing data between a data source and a user, comprising:
receiving a request (102) relating to the data to be transmitted,
wherein the request was sent by the user to the data source;
determining an identity of the user by the data source based on the request (105);
providing an encryption data set based on the identity of the user (106);
compiling the data into a transmission data set (107);
encrypting the transmission data set by means of the encryption data set (108);
sending the encrypted transmission data set to the user (109);
wherein determining the identity, providing the encryption data set and encrypting the transmission data set are started at least indirectly when the request is received and are performed automatically,
further comprising:
extracting the encryption data set from the request.

2. Method according to claim 1, wherein the encrypting is carried out by means of an asymmetric encryption method.

3. Method according to any of claims 1 or 2, further comprising:
extracting a digital signature of the user from the request and using the digital signature for determining the identity of the user.

4. Method according to any of claims 1 to 3, wherein identification data of trustworthy users are stored in the data source or are provided to be used for determining the identity of the user.

5. Method according to any of claims 1 to 4, wherein determining the identity of the user is carried out in conjunction with trustworthy third sources such as a trust centre, an eID provider or clearing centres.

6. Method according to any of claims 1 to 5, wherein the encrypted transmission data set is sent via a secure transmission path.

7. Method according to any of claims 1 to 6, further comprising checking the structure of the request or of the encrypted transmission data set on a transport route between the user and the data source.

8. Method for requesting and receiving encrypted data, comprising:
creating a request for a data source;
inserting identification data of the user in the request;
sending the request to the data source;
receiving a response from the data source;
decrypting an encrypted data set within the response by means of a decryption data set which is logically linked to the identification data.

9. Method according to claim 8, wherein the decryption data set is stored on a secure carrier medium.

10. Method according to claim 8 or 9, further comprising:
receiving authentication data from the user;
checking the authentication data; and
in return to a positive response to the checking of the authentication data: invoking at least one of the actions
creating the request;
inserting the identification data and
sending the request.

11. Method according to any of claims 8 to 10, further comprising:
signing the request by means of a digital signature before sending the request to the data source.

12. Computer program product with instructions to be performed by a computer system for executing a method according to any of the preceding claims.

13. Computer program product according to claim 12, wherein the computer program product is one of a stand-alone-application, an applet, a browser plug-in, or an application on external components.

14. Computer system (410), comprising:
a network interface (411);
a data source (416);
an encryption unit (415);
an identity detection unit (413);
wherein the network interface is designed and configured to detect the receiving of a request relating to the data to be transmitted and to at least to send a signal to the identity detection unit;
wherein the identity detection unit is designed and configured to analyse, in response to the signal, the request with respect to an identity of the user and to provide an encryption data set based on the identity; and
wherein the encryption unit is designed and configured to encrypt the data provided by the data source and compiled to a data set by means of the encryption data set,
wherein the encryption data set is extracted from the request.

## Revendications

1. Procédé pour fournir des données entre une source de données et un utilisateur, comprenant :
la réception d'une demande (102) qui concerne les données à transmettre, dans lequel la demande a été envoyée par l'utilisateur à la source de données ;
la détermination d'une identité de l'utilisateur par la source de données à l'aide de la demande (105) ;
la fourniture d'un ensemble de données de cryptage sur la base de l'identité de l'utilisateur (106);
le regroupement des données en un ensemble de données de transmission (107) ;
le cryptage de l'ensemble de données de transmission au moyen de l'ensemble de données de cryptage (108) ;
l'envoi de l'ensemble de données de transmission crypté à l'utilisateur (109) ;
dans lequel la détermination de l'identité, la fourniture de l'ensemble de données de cryptage et le cryptage de l'ensemble de données de transmission sont déclenchés au moins indirectement par la réception de la demande et sont exécutés automatiquement,
comprenant en outre :
l'extraction de l'ensemble de données de cryptage hors de la demande.

2. Procédé selon la revendication 1, dans lequel le cryptage s'effectue au moyen d'un procédé de cryptage asymétrique.

3. Procédé selon l'une des revendications 1 et 2, comprenant en outre :
l'extraction d'une signature numérique de l'utilisateur hors de la demande et l'utilisation de la signature numérique lors de la détermination de l'identité de l'utilisateur.

4. Procédé selon l'une des revendications 1 à 3, dans lequel des données d'identification d'utilisateurs de confiance sont enregistrées ou fournies au niveau de la source de données afin d'être utilisées lors de la détermination de l'identité de l'utilisateur.

5. Procédé selon l'une des revendications 1 à 4, dans lequel la détermination de l'identité de l'utilisateur s'effectue en incluant des tiers de confiance, par exemple un prestataire de services de certification, un fournisseur de cartes d'identité électroniques ou un médiateur.

6. Procédé selon l'une des revendications 1 à 5, dans lequel l'envoi de l'ensemble de données de transmission crypté s'effectue par l'intermédiaire d'un trajet de transmission sécurisé.

7. Procédé selon l'une des revendications 1 à 6, comprenant en outre une vérification de la structure de la demande ou de l'ensemble de données de transmission crypté sur un trajet de transport entre l'utilisateur et la source de données.

8. Procédé pour demander et recevoir des données cryptées, comprenant :
la création d'une demande pour une source de données ;
l'insertion de données d'identité de l'utilisateur dans la demande ;
l'envoi de la demande à la source de données ;
la réception d'une réponse en provenance de la source de données ;
le décryptage d'un ensemble de données crypté à l'intérieur de la réponse au moyen d'un ensemble de données de décryptage qui est combiné logiquement aux données d'identité.

9. Procédé selon la revendication 8, dans lequel l'ensemble de données de décryptage est mémorisé sur un support sécurisé.

10. Procédé selon la revendication 8 ou 9, comprenant en outre :
la réception de données d'authentification en provenance de l'utilisateur ;
la vérification des données d'identification ;
en réaction à une réponse positive concernant la vérification des données d'identification : l'autorisation d'au moins une des actions
la création de la demande,
l'insertion des données d'identité et
l'envoi de la demande.

11. Procédé selon l'une des revendications 8 à 10, comprenant en outre :
la signature de la demande au moyen d'une signature numérique avant l'envoi de la demande à la source de données.

12. Produit programme informatique avec des instructions exécutables par un système informatique pour la mise en oeuvre d'un procédé selon l'une des revendications précédentes.

13. Produit programme informatique selon la revendication 12, dans lequel le produit programme informatique est une application isolée, une applet, un module d'extension de navigateur ou une application sur des appareils tiers.

14. Système informatique (410) comprenant :
une interface de réseau (411) ;
une source de données (416) ;
une unité de cryptage (415) ;
une unité de détermination d'identité (413) ;
dans lequel l'interface de réseau est conçue et configurée pour détecter l'arrivée d'une demande concernant des données à fournir et pour envoyer une signalisation au moins à l'unité de détermination d'identité ;
dans lequel l'unité de détermination d'identité est conçue et configurée pour, en réaction à la signalisation, évaluer la demande quant à une identité de l'utilisateur et fournir un ensemble de données de cryptage sur la base de l'identité ; et
dans lequel l'unité de cryptage est conçue et configurée pour crypter au moyen de l'ensemble de données de cryptage les données fournies par la source de données et regroupées en un ensemble de données,
dans lequel l'ensemble de données de cryptage est extrait de la demande.
